# EUROPÄISCHE PATENTSCHRIFT

(11) **EP 3 187 038 B1**
(45) Veröffentlichungstag und Bekanntmachung des Hinweises auf die Patenterteilung: **17.07.2019**
(21) Anmeldenummer: 16206274.9
(22) Anmeldetag: 22.12.2016
(51) Int. Cl.: A01G 7/06

(54) **VORRICHTUNG ZUM ANWENDEN VON PFLANZENBEHANDLUNGSMITTELN**
DEVICE FOR USING PLANT TREATMENT AGENTS
DISPOSITIF D'APPLICATION DE PRODUITS PHYTOSANITAIRES

(30) Priorität: 04.01.2016 AT 12016
(43) Veröffentlichungstag der Anmeldung: 05.07.2017
(73) Patentinhaber: SMART Elektronik GmbH, 9530 Bad Bleiberg (AT)
(72) Erfinder: Nadrag, Enrico, 9530 Bad Bleiberg (AT); Nadrag, Walter, 9531 Bleiberg-Kreuth (AT)
(74) Vertreter: Beer & Partner Patentanwälte KG

(56) Entgegenhaltungen:
- WO-A1-2006/089344
- WO-A1-2010/066733
- FR-A- 444 859
- GB-A- 407 417
- US-A- 3 890 740
- US-A- 3 920 393
- US-A- 4 651 465
- US-A1- 2009 007 481
- US-B1- 6 405 480

## Beschreibung

Die Erfindung betrifft eine Vorrichtung zum Anwenden von Pflanzenbehandlungsmitteln, insbesondere zum Anwenden von Schädlingsbekämpfungsmitteln bei Bäumen.

Pflanzenbehandlungsmittel und Schädlingsbekämpfungsmittel werden auf verschiedene Art angewendet, wobei es immer wieder problematisch ist, dass ein Großteil des aufgebrachten Mittels ungenützt bleibt, weil es nicht an die für seine Schädlinge bekämpfende Wirkung richtige Stelle gelangt.

Aus US 2009/007481 A1 ist eine Vorrichtung zum Aufbringen von wenigstens einem Behandlungsmittel auf einen Stamm einer Pflanze, insbesondere eines Baumes, bekannt, wobei eine Manschette in Form eines ringförmigen Körpers einen Hohlraum zwischen der Außenseite des Stammes und der Innenfläche der Manschette begrenzt. Die bekannte Vorrichtung weist eine Leitung zum Zuführen eines Behandlungsmittels auf.

Der Erfindung liegt die Aufgabe zugrunde, eine Vorrichtung der eingangs genannten Gattung zur Verfügung zu stellen, die ein gezieltes Aufbringen von Pflanzenschutzmitteln und von Schädlingsbekämpfungsmitteln erlaubt.

Gelöst wird diese Aufgabe erfindungsgemäß mit einer Vorrichtung, welche die Merkmale von Anspruch 1 aufweist.

Bevorzugte und vorteilhafte Ausgestaltungen der Erfindung sind Gegenstand der Unteransprüche.

Erfindungsgemäß ist die Manschette aufblasbar ausgeführt. So kann durch Aufblasen der Manschette ein dichtes Anlegen der Manschette an einen Stamm erreicht werden.

Da bei der erfindungsgemäßen Vorrichtung eine, vorzugsweise flexible, Manschette vorgesehen ist, die um einen Stamm, z.B. den Stamm eines Baumes, gelegt werden kann, können als Pflanzenschutzmittel, insbesondere als Schädlingsbekämpfungsmittel, dienende Flüssigkeiten oder Gase (oder auch andere Behandlungsmedien) kontrolliert so aufgebracht werden, dass sie in und unter die Borke der Stämme von Bäumen eindringen.

So kann mit der erfindungsgemäßen Vorrichtung eine Pflanzenbehandlung und Pflanzenheilung und insbesondere eine Schädlingsbekämpfung ohne wesentliche Verluste an Behandlungsmittel zielgerichtet und wirksam ausgeführt werden.

Ein Vorteil der erfindungsgemäßen Vorrichtung ist es, dass sie es möglich macht, Schädlinge an ihrer Brutstätte zu bekämpfen und das weitere Ausbreiten von Schädlingen von der befallenen Pflanze, insbesondere von dem befallenen Baum, auf andere Pflanzen, insbesondere Bäume, zu verhindern.

Beispielsweise umfasst die erfindungsgemäße Vorrichtung eine ringförmige, an einer Stelle offene, Manschette die einen zum Stamm, beispielsweise den Stamm eines Baumes, hin offenen Hohlraum begrenzt und die abgedichtet an den Stamm der Pflanze, z.B. eines Baumes, angelegt werden kann.

Die Manschette umschließt den Stamm in ihrer Gebrauchsstellung teilweise oder vollständig, und begrenzt einen zum Stamm hin offenen Hohlraum, in den das Behandlungsmittel, z.B. ein Schädlingsbekämpfungsmittel, in Form von Gas oder einer Flüssigkeit, eingebracht werden kann.

Die erfindungsgemäße Vorrichtung kann auch so ausgebildet sein, dass das Behandlungsmittel unmittelbar durch wenigstens ein Loch in der Rinde des Baumes, beispielsweise in ein von einem Schädling (Borkenkäfer) stammendes Loch, eingebracht wird. Bei dieser Variante kann vorgesehen sein, dass wenigstens eine Leitung, über die das Behandlungsmittel zugeführt wird, so weit verlängert ist, dass sie sich durch den von der Manschette begrenzten Hohlraum erstreckt und in ein Loch in der Rinde eingreift, nachdem es in das Loch hineingesteckt worden ist.

In Betracht gezogen ist im Rahmen der Erfindung auch, beide Varianten - Einleiten des Behandlungsmittels in den von der Manschette begrenzten Hohlraum und Einleiten des Behandlungsmittels unmittelbar in ein Loch in der Rinde des zu behandelnden Baumes - gleichzeitig oder einander abwechselnd anzuwenden. In diesem Fall kann in der Manschette wenigstens eine Leitung münden, die im Hohlraum endet, und wenigstens eine weitere Leitung vorgesehen sein, die verlängert ist und mit ihrem freien Ende in ein Loch hineingesteckt werden kann.

Für gewöhnlich genügt es, wenn das Behandlungsmittel, z.B. für die Schädlingsbekämpfung, eingebracht wird, da es beispielsweise durch die von einem Schädling verursachten Öffnungen in der Borke im Stamm eines Baumes dorthin gelangt, wo es zum Bekämpfen von Schädlingen wirksam sein soll. Soferne solche Öffnungen nicht vorgesehen sind, können diese vor dem Anbringen der Manschette, beispielsweise durch Bohren, erzeugt werden.

Die erfindungsgemäße Vorrichtung erlaubt es, neue Behandlungsmedien einzusetzen, die geeignet sind, Schädlinge zu bekämpfen und/oder sie an ihrer Ausbreitung zu behindern.

Bei Anwenden der erfindungsgemäßen Vorrichtung kann auch der Einsatz von ungiftigen Gasen in Betracht gezogen werden.

Im Rahmen der Erfindung ist es auch möglich, dass das Behandlungsmittel ungiftig ist und als Wirkkomponente primär Pilzsporen, Bakterien oder andere natürliche Mittel, die Schädlinge bekämpfen (Gegenspieler), enthält.

Weitere Einzelheiten und Merkmale der Erfindung ergeben sich aus der nachstehenden Beschreibung eines Ausführungsbeispiels unter Bezugnahme auf die Zeichnungen. Es zeigt:
- Fig.1: schematisiert eine erfindungsgemäße Vorrichtung in ihrer Wirkstellung und
- Fig.2: im Schnitt eine Ausführungsform einer Manschette.

Eine erfindungsgemäße Vorrichtung 1 umfasst eine ringförmige Manschette 2 aus flexiblem (elastischem) Werkstoff, die an einen Stamm 3 eines Baumes angelegt wird, indem sie um den Stamm 3 herum gelegt wird. Um dies einfach möglich zu machen, ist der die Manschette 2 bildende, ringförmige Körper an einer Stelle offen oder es ist eine Manschette 2 aus mehreren Teilen vorgesehen.

Die Manschette 2 hat eine konkave, innere, dem Stamm 3 zugewendete, Seite, die einen zum Stamm 3 hin offenen Hohlraum 4 nach außen hin begrenzt.

In den Hohlraum 4 wird über eine Leitung 5, die durch die Manschette 2 geführt ist, ein Behandlungsmittel eingebracht.

Im Ausführungsbeispiel ist gezeigt, dass das Behandlungsmittel ein Gas ist, und in einem Vorratsbehälter 6 enthalten ist.

Durch eine Steuerung 7 (elektronische Steuerung od. dgl.) wird Gas in der jeweils benötigten Menge und/oder Zeit zugeführt. Die Manschette 2 kann ein aufblasbarer, an wenigstens einer Stelle offener, ringförmiger Körper sein, wobei durch das Aufblasen das dichte Anliegen der Manschette 2 an dem Stamm 3 des Baumes bewirkt wird. Die Manschette 2 kann durch eine Leitung mit Ventil 10 aufgeblasen werden. So wird verhindert, dass Behandlungsmittel aus dem Hohlraum 4 innerhalb der Manschette 2 ungenützt ins Freie abströmt.

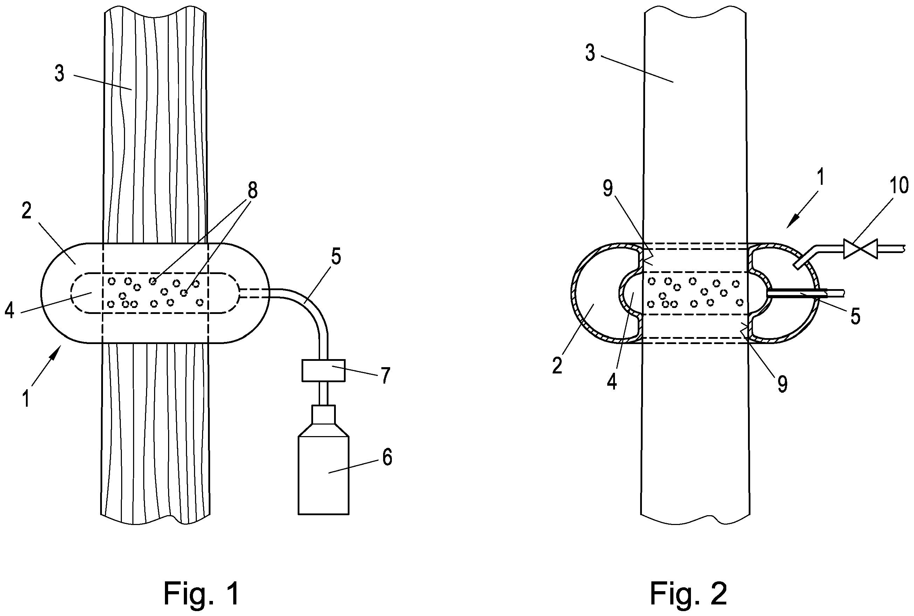

Das in Fig. 2 gezeigte Ventil 10 kann auch unmittelbar in der Wand des die Manschette 2 bildenden hohlen, ringförmigen Körpers angeordnet sein. An diesem Ventil 10 wird eine Quelle für in die Manschette 2 einzuleitendes Gas, beispielsweise eine Luftpumpe, angeschlossen, wenn die Manschette 2 aufgeblasen werden soll.

Bei der in Fig. 2 dargestellten Ausführungsform ist gezeigt, wie die Manschette 2 als aufblasbarer, ringförmiger Hohlkörper ausgebildet ist, in ihrem aufgeblasenen Zustand mit ihren Ringflächen 9 dicht an der Außenseite des Stamms 3 anliegt, und dabei den Hohlraum 4 frei lässt.

Das in den Hohlraum 4 über die Leitung 5 eingebrachte Behandlungsmittel, beispielsweise ein Schädlingsbekämpfungsmittel, dringt über Löcher 8 in der Rinde und im Stamm 3 in das Innere des Stammes 3 ein und entfaltet dort seine die Schädlinge bekämpfende Wirkung.

Die Löcher 8 sind beispielsweise Öffnungen von Borkenkäfern oder, soferne solche nicht vorliegen, nachträglich durch Bohren oder Ähnliches künstlich erzeugte Öffnungen.

Die Manschette 2, die im Wesentlichen ringförmig ausgebildet ist, ist an wenigstens einer Stelle offen. Damit die Manschette 2 mit sicherem Sitz und mit dichtem Anliegen an den Stamm 3 angelegt werden kann, sind an den Enden des ringförmigen Körpers, der die Manschette 2 bildet, Vorrichtungen zum Verbinden der Enden des ringförmigen Körpers angeordnet.

Wenn die Leitung 5, durch die das Behandlungsmittel zugeführt wird, bei der erfindungsgemäßen Vorrichtung so verlängert ist, dass das freie Ende der Leitung in dem von der Manschette 2 nach außen hin begrenzten Hohlraum 4 liegt, kann das freie Ende der Leitung 5 in eines der Löcher 8 in der Rinde und im Stamm 3 des Baumes gesteckt werden. So wird Behandlungsmittel unmittelbar in den Stamm 3 des Baumes eingebracht. Bei dieser Ausführungsform dient die Manschette 2 nicht nur als Träger für die Leitung 5 und hält diese in der gewünschten Lage am Stamm 3, sondern verhindert auch, dass Behandlungsmittel, das nicht in das Loch 8 eintritt oder aus diesem wieder austritt, verloren geht. So wird Behandlungsmittel ohne Verluste wirksam eingesetzt.

In Betracht gezogen ist auch eine Ausführungsform der erfindungsgemäßen Vorrichtung, die wenigstens im Hohlraum 4 zwei oder mehr als zwei freie Enden der Leitung 5 aufweist. Dies kann beispielsweise erreicht werden, indem sich die Leitung 5 innerhalb oder außerhalb der Manschette 2 in zwei oder mehr als zwei Teilleitungen teilt. Diese Ausführungsform erlaubt es, Behandlungsmittel gleichzeitig in zwei oder mehr als zwei Löcher 8 einzuleiten.

Wenn die erfindungsgemäße Vorrichtung wenigstens eine Leitung 5 mit innerhalb des Hohlraumes 4 liegendem, freiem Ende aufweist, kann diese auch verwendet werden, ohne dass das freie Ende der Leitung 5 in ein Loch 8 in der Rinde und im Stamm 3 hineingesteckt wird. In diesem Fall wird die Vorrichtung so verwendet, wie das zuvor für die in den Fig. 1 und 2 gezeigte Ausführungsform der erfindungsgemäßen Vorrichtung erläutert worden ist.

Schließlich ist im Rahmen der Erfindung auch eine Ausführungsform der erfindungsgemäßen Vorrichtung in Betracht gezogen, die eine Leitung 5 mit der in den Fig. 1 und 2 gezeigten Ausführungsform und eine in den Hohlraum 4 verlängerte Leitung 5, deren wenigstens ein freies Ende wahlweise in ein Loch 8 (oder in mehrere Löcher 8) hineingesteckt werden kann oder das einfach im Hohlraum 4 liegt, aufweist.

Die bei der erfindungsgemäßen Vorrichtung vorgesehene Manschette 2 muss den Stamm 3 nicht vollständig umgeben. Es ist im Rahmen der Erfindung auch eine Ausführungsform der Manschette 2 in Betracht gezogen, die nur in einem Teil, z.B. der Hälfte, einem Drittel, drei Viertel oder zwei Drittel des Umfanges des Stammes 3 an dem Stamm 3 anliegt. Bei solchen Manschetten 2 ist dafür gesorgt, dass der Hohlraum 4 an den Enden der Manschette 2 geschlossen ist.

Zusammenfassend kann ein Ausführungsbeispiel der Erfindung wie folgt beschrieben werden:
Eine Vorrichtung 1 zum Aufbringen von einem Behandlungsmittel auf Pflanzen, insbesondere Bäume, umfasst eine Manschette 2, die von einem ringförmigen Körper gebildet ist, und die um einen Stamm 3 herum gelegt wird. Durch Aufblasen der als ringförmiger Hohlkörper ausgebildeten Manschette 2 legt sich diese mit ihren Ringflächen 9 dichtend an den Stamm 3 an. Ein durch eine Leitung 5 eingebrachtes Behandlungsmittel, wie ein gasförmiges oder flüssiges Schädlingsbekämpfungsmittel, kann aus dem von der konkaven Innenseite der Manschette 2 begrenzten und durch Anliegen der Ringflächen 9 nach außen hin abgedichteten Hohlraum 4 nicht ungenützt austreten, sondern tritt durch Löcher 8 in den Stamm 3 ein und entfaltet dort seine Schädlinge bekämpfende Wirkung.

## Patentansprüche

1. Vorrichtung zum Aufbringen von wenigstens einem Behandlungsmittel auf einen Stamm (3) einer Pflanze, insbesondere eines Baumes mit einer Manschette (2) in Form eines ringförmigen Körpers, die einen Hohlraum (4) zwischen der Außenseite des Stammes (3) und der Innenfläche der Manschette (2) begrenzt, und mit einer Leitung (5) zum Zuführen des Behandlungsmittels, **dadurch gekennzeichnet, dass** der die Manschette (2) bildende Körper ein Hohlkörper ist, und dass der Hohlkörper eine mit einem Ventil (10) versehene Öffnung aufweist, durch die ein unter Druck stehendes Gas in den Hohlkörper eingeleitet werden kann.

2. Vorrichtung nach Anspruch 1, **dadurch gekennzeichnet, dass** der die Manschette (2) bildende, ringförmige Körper an wenigstens einer Stelle offen ist.

3. Vorrichtung nach Anspruch 1 oder 2, **dadurch gekennzeichnet, dass** an der offenen Stelle des die Manschette (2) bildenden Körpers Einrichtungen zum Verbinden der dort liegenden Enden des die Manschette (2) bildenden Körpers vorgesehen sind.

4. Vorrichtung nach einem der Ansprüche 1 bis 3, **dadurch gekennzeichnet, dass** die dem Baumstamm (3) zuzukehrende Innenseite des die Manschette (2) bildenden Körpers zwischen zwei Ringflächen (9) konkav gekrümmt ist.

5. Vorrichtung nach einem der Ansprüche 1 bis 4, **dadurch gekennzeichnet, dass** in der von einem Vorratsbehälter (6) für Behandlungsmedium zu der Manschette (2) führenden Leitung (5) eine Steuerung (7), mit der die Dauer des Zuführens von Behandlungsmedium und/oder die Menge an Behandlungsmedium geregelt wird, vorgesehen ist.

6. Vorrichtung nach einem der Ansprüche 1 bis 5, **dadurch gekennzeichnet, dass** die Manschette (2) an ihrer dem Stamm (3) zuzukehrenden Seite, insbesondere im Bereich ihrer Ringflächen (9), mit einem Abdichtstreifen versehen ist.

7. Vorrichtung nach einem der Ansprüche 1 bis 6, **dadurch gekennzeichnet, dass** die Leitung (5) zum Zuführen des Behandlungsmittels bis in den Hohlraum (4), der von der Manschette (2) begrenzt ist, verlängert ist.

8. Vorrichtung nach Anspruch 7, **dadurch gekennzeichnet, dass** das freie, im Hohlraum (4) liegende Ende der Leitung (5) in ein Loch (8) in der Rinde des Stammes (3) des Baumes einsteckbar ist.

## Claims

1. Device for applying at least one treatment agent to a trunk (3) of a plant, in particular of a tree, comprising a sleeve (2) in the form of an annular body, which bounds a cavity (4) between the outer side of the trunk (3) and the inner surface of the sleeve (2), and comprising a line (5) for feeding the treatment agent, **characterized in that** the body forming the sleeve (2) is a hollow body, and **in that** the hollow body has an opening which is provided with a valve (10) and through which a pressurized gas can be introduced into the hollow body.

2. Device according to claim 1, **characterized in that** the annular body forming the sleeve (2) is open at least at one point.

3. Device according to claim 1 or 2, **characterized in that**, at the open point of the body forming the sleeve (2), means are provided for joining the ends of the body forming the sleeve (2) which are situated at that point.

4. Device according to one of claims 1 to 3, **characterized in that** the inner side, facing towards the tree trunk (3), of the body forming the sleeve (2) is concavely curved between two annular surfaces (9).

5. Device according to one of claims 1 to 4, **characterized in that** a controller (7), by which the treatment agent feed duration and/or the amount of treatment agent is controlled, is provided in the line (5) leading from a storage container (6) for treatment agent to the sleeve (2).

6. Device according to one of claims 1 to 5, **characterized in that** the sleeve (2) is provided with a sealing strip on the side thereof facing towards the trunk (3), in particular in the region of the annular surfaces (9) thereof.

7. Device according to one of claims 1 to 6, **characterized in that** the line (5) for feeding the treatment agent is extended into the cavity (4), which is bounded by the sleeve (2).

8. Device according to claim 7, **characterized in that** the free end of the line (5), which is situated in the cavity (4), can be inserted into a hole (8) in the bark of the trunk (3).

## Revendications

1. Dispositif pour appliquer au moins un produit de traitement sur un tronc (3) d'une plante, en particulier d'un arbre, avec un manchon (2) en forme de corps annulaire qui délimite une cavité (4) entre la face extérieure du tronc (3) et la face intérieure du manchon (2) et avec une conduite (5) pour amener le produit de traitement, **caractérisé en ce que** le corps formant le manchon (2) est un corps creux et **en ce que** le corps creux présente une ouverture munie d'une valve (10) à travers laquelle un gaz sous pression peut être introduit dans le corps creux.

2. Dispositif selon la revendication l, **caractérisé en ce que** le corps annulaire formant le manchon (2) est ouvert au moins à un endroit.

3. Dispositif selon la revendication 1 ou 2, **caractérisé en ce que** sont prévus, à l'endroit ouvert du corps formant le manchon (2), des moyens pour relier les extrémités du corps creux formant le manchon (2) qui se trouvent là.

4. Dispositif selon l'une des revendications 1 à 3, **caractérisé en ce que** la face du corps creux formant le manchon (2) à tourner vers le tronc de l'arbre (3) est concave entre deux surfaces annulaires (9).

5. Dispositif selon l'une des revendications 1 à 4, **caractérisé en ce qu'**est prévue, dans la conduite (5) menant d'un réservoir (6) de produit de traitement au manchon (2), une unité de commande (7) avec laquelle la durée d'arrivée du produit de traitement et/ou la quantité de produit de traitement sont régulées.

6. Dispositif selon l'une des revendications 1 à 5, **caractérisé en ce que** le manchon (2) est muni d'une bande d'étanchéité sur sa face à tourner vers le tronc (3), en particulier au niveau de ses surfaces annulaires (9).

7. Dispositif selon l'une des revendications 1 à 6, **caractérisé en ce que** la conduite (5) destinée à amener le produit de traitement est prolongée jusqu'à la cavité (4) délimitée par le manchon (2).

8. Dispositif selon la revendication 7, **caractérisé en ce que** l'extrémité libre de la conduite (5) qui se trouve dans la cavité (4) peut être introduite dans un trou (8) dans l'écorce du tronc (3) de l'arbre.
